# EUROPÄISCHE PATENTSCHRIFT

(11) **EP 3 826 227 B1**
(45) Veröffentlichungstag und Bekanntmachung des Hinweises auf die Patenterteilung: **20.12.2023**
(21) Anmeldenummer: 20207787.1
(22) Anmeldetag: 16.11.2020
(51) Int. Cl.: H04L 12/12

(54) **VERFAHREN ZUM INITIALISIEREN EINES BUSSYSTEMS FÜR EINE PROZESSANLAGE UND BUSSYSTEM**
METHOD FOR INITIALIZING A BUS SYSTEM FOR A PROCESS INSTALLATION AND BUS SYSTEM
PROCÉDÉ D'INITIALISATION D'UN SYSTÈME DE BUS POUR UNE INSTALLATION DE PROCESSUS ET SYSTÈME DE BUS

(30) Priorität: 25.11.2019 DE 102019131773
(43) Veröffentlichungstag der Anmeldung: 26.05.2021
(73) Patentinhaber: Krohne Messtechnik GmbH, 47058 Duisburg (DE)
(72) Erfinder: Spiegel, Christoph, 46049 Oberhausen (DE)
(74) Vertreter: Gesthuysen Patentanwälte

(56) Entgegenhaltungen:
- DE-A1-102004 060 007
- DE-A1-102008 005 317
- DE-A1-102011 078 030
- DE-A1-102013 220 707

## Beschreibung

Die Erfindung betrifft ein Verfahren zum Initialisieren eines Bussystems für eine Prozessanlage, wobei das Bussystem wenigstens einen ersten Busteilnehmer und einen zweiten Busteilnehmer aufweist, wobei der erste Busteilnehmer und der zweite Busteilnehmer jeweils an einem Montageort in der Prozessanlage verbaut sind, wobei der erste Busteilnehmer ein administrativer Busteilnehmer ist und wobei in dem ersten Busteilnehmer eine Liste wenigstens zweier Montageorte der Busteilnehmer abgelegt ist und wobei der erste Busteilnehmer und der zweite Busteilnehmer über einen Datenbus miteinander verbunden sind. Zudem betrifft die Erfindung ein entsprechendes Bussystem für eine Prozessanlage.

Prozessanlagen sind in einer Vielzahl aus dem Stand der Technik bekannt und werden oftmals durch Bussysteme angesteuert. In dem Bussystem können die einzelnen Busteilnehmer der Prozessanlage über den Datenbus miteinander kommunizieren oder können die einzelnen Busteilnehmer angesteuert werden, wodurch in vielen Produktionszweigen nicht nur die Produktion vereinfacht wird, sondern auch die Kosten der Produktion gesenkt werden können. Die Busteilnehmer sind beispielsweise die Feldgeräte einer Prozessanlage.

Für die vorliegende Erfindung kommt es nicht auf die Art des Bussystems an. Es ist also vorliegend nicht von Bedeutung, welche Topologie das Bussystem aufweist oder nach welchem Protokoll die einzelnen Busteilnehmer miteinander kommunizieren. Wichtig ist einzig, dass das Bussystem wenigstens einen administrativen Busteilnehmer aufweist, wobei ein administrativer Busteilnehmer gegenüber dem oder den anderen Busteilnehmern dadurch ausgezeichnet ist, dass er Informationen über das gesamte Bussystem erlangen kann. Ein administrativer Busteilnehmer kann ein normaler Busknoten sein, beispielsweise ein Busmaster oder auch ein Busslave, ein administrativer Busteilnehmer kann aber auch ein an dem Datenbus angeschlossener Leitrechner (Prozessleitsystem) sein. Aus diesem Grund wird hier von einem "administrativen Busteilnehmer" gesprochen, da es nicht darauf ankommt, ob der administrative Busteilnehmer den Datenbus als Ressource zu arbitrieren vermag oder nicht.

Typische Prozessanlagen verfügen über eine Mehrzahl, beispielsweise einige Hunderte von Busteilnehmern, die jeweils an einem Montageort in der Prozessanlage verbaut sind.

Beispielsweise zeigt die DE 10 2008 005 317 A1 ein Bussystem in Form eines ultraschallbasierten Fahrerassistenzsystems sowie ein Verfahren zur Initialisierung dieses Bussystems. Bei dem Bussystem sind mehrere Ultraschallsensoren an verschiedenen Einbauorten in einem Auto verbaut. Jeder Ultraschallsensor weist einen von außen lesbaren Identifikationscode auf. Um die einzelnen Ultraschallsensoren ihren Einbauorten zuzuordnen, wird mit einem externen Lesegerät der von außen auf den Ultraschallsensoren angeordnete Identifikationscode ausgelesen und über das Lesegerät einer Auswerteeinheit zugeleitet. In der Auswerteeinheit werden dann die ausgelesenen und übermittelten Identifikationscodes einer logischen Adresse zugeordnet, die stellvertretend für den Montageort steht.

Bei den aus dem Stand der Technik bekannten Bussystemen kann der administrative Busteilnehmer keine Topologieerkennung durchführen. Das bedeutet, dass er nicht ermitteln kann, an welchen Montageorten die einzelnen Busteilnehmer des Bussystems angeordnet sind, er kann also keine Zuordnung eines Busteilnehmers zu einem bestimmten Montageort vornehmen. Die Kenntnis dieser Zuordnung ist jedoch für eine konkrete Ansteuerung und den reibungsfreien Prozessablauf unerlässlich. Entsprechend müssen die einzelnen Busteilnehmer am administrativen Busteilnehmer angelernt werden.

Aus dem Stand der Technik ist es bekannt, das Anlernen über eine manuelle Zuordnung durchzuführen. Jeder der Busteilnehmer verfügt über ein ihn eindeutig identifizierendes Identifikationsmerkmal. Dies kann beispielsweise eine Seriennummer des Busteilnehmers sein. Die Seriennummer des Busteilnehmers ist beispielsweise über ein an dem Busteilnehmer angebrachtes Typenschild erkennbar oder über eine digitale Schnittstelle des Busteilnehmers abrufbar. Dieses eindeutige Identifikationsmerkmal eines jeden Busteilnehmers ermöglicht eine manuelle Zuordnung - beispielsweise durch einen die Prozessanlage in Betrieb nehmenden Techniker - eines Busteilnehmers zu einem Montageort. Insbesondere bei einer Vielzahl von Busteilnehmern, wie sie bei den üblichen Prozessanlagen vorhanden sind, ist die manuelle Zuordnung extrem aufwendig, insbesondere handelt es sich hier um einen besonders zeitaufwendigen Vorgang.

Entsprechend liegt der Erfindung die Aufgabe zugrunde, ein Verfahren zum Initialisieren eines Bussystems und ein entsprechendes Bussystem anzugeben, mit dem eine einfache Initialisierung des Bussystems ermöglicht wird.

Erfindungsgemäß ist die Aufgabe bei dem Verfahren zum Initialisieren eines in Rede stehenden Bussystems gemäß Patentanspruch 1 gelöst.

Im Folgenden wird bei der Beschreibung des erfindungsgemäßen Verfahrens auch auf das erfindungsgemäße Bussystem Bezug genommen, da so eine anschauliche Beschreibung der Erfindung vereinfacht wird. Sämtliche in Bezug mit dem erfindungsgemäßen Verfahren gemachten Ausführungen gelten auch für das erfindungsgemäße Bussystem und umgekehrt.

Zunächst ist das erfindungsgemäße Bussystem dadurch gekennzeichnet, dass wenigstens der zweite Busteilnehmer einen Identifikationssensor aufweist. Wenn es heißt, dass wenigstens der zweite Busteilnehmer einen Identifikationssensor aufweist, dann kann beispielsweise nur der zweite Busteilnehmer einen Identifikationssensor aufweisen, es kann aber auch der erste, nämlich der administrative Busteilnehmer einen Identifikationssensor aufweisen. Auf mögliche Ausgestaltungen des Identifikationssensors wird weiter unten eingegangen.

Das erfindungsgemäße Verfahren zum Initialisieren eines Bussystems zeichnet sich nun durch folgende Verfahrensschritte aus:
In einem Anregungsschritt wird der Identifikationssensor des zweiten Busteilnehmers mit einer Identifikationsanregung angeregt.

Nach der Aufnahme der Identifikationsanregung durch den Identifikationssensor sendet der zweite Busteilnehmer in einem Sendeschritt ein den zweiten Busteilnehmer identifizierendes Identifikationssignal an den administrativen Busteilnehmer aus.

In einem Zuordnungsschritt ordnet der administrative Busteilnehmer nach Erhalt des den zweiten Busteilnehmer identifizierenden Identifikationssignals den zweiten Busteilnehmer einem Montageort der in der abgelegten Liste aufgeführten Montageorte zu.

Erfindungsgemäß ist erkannt worden, dass das Verfahren zur Initialisierung eines Bussystems erheblich dadurch vereinfacht werden kann, dass die Busteilnehmer selbständig sie identifizierende Identifikationssignale an den administrativen Busteilnehmer aussenden. Die Busteilnehmer müssen hierzu lediglich zur Aussendung der Identifikationssignale angeregt werden. Bei dem erfindungsgemäßen Verfahren ist also die manuelle Zuordnung der Busteilnehmer zu ihrem jeweiligen Montageort nicht mehr notwendig, so dass das erfindungsgemäße Verfahrens besonders zeit- und kostensparend angewendet werden kann.

Wie ausgeführt, muss ein Busteilnehmer, der einem Montageort zugeordnet werden soll, mit einer Identifikationsanregung angeregt werden, nämlich muss der Identifikationssensor des Busteilnehmers angeregt werden. Um diese Identifikationsanregung zu initiieren, ist in einer Ausgestaltung vorgesehen, dass das Bussystem eine Aufforderungseinheit aufweist. Die Aufforderungseinheit ist über einen Kommunikationskanal mit dem administrativen Busteilnehmer verbunden, wobei der Kommunikationskanal ein drahtgebundener oder ein drahtloser Kommunikationskanal sein kann.

Erfindungsgemäß weist das Verfahren in einer Ausführungsform dann weitere Verfahrensschritte auf:
In einem Mitteilungsschritt teilt der administrative Busteilnehmer der Aufforderungseinheit den Montageort des anzuregenden Busteilnehmers mit. In dieser Ausführungsform wird also durch den administrativen Busteilnehmer bestimmt, an welchem Montageort ein Busteilnehmer angeregt werden soll. Der administrative Busteilnehmer kann insbesondere dann, wenn das Bussystem mehrere Busteilnehmer aufweist, die Reihenfolge der Montageorte angeben, an denen die dort verbauten Busteilnehmer angeregt werden sollen. Die Reihenfolge kann hierbei beispielsweise der Reihenfolge der in der Liste abgelegten Montageorte entsprechen.

In einer alternativen Ausgestaltung des erfindungsgemäßen Verfahrens teilt in dem Mitteilungsschritt die Aufforderungseinheit dem administrativen Busteilnehmer den Montageort des anzuregenden Busteilnehmers mit. In dieser Ausführungsform bestimmt also nicht der administrative Busteilnehmer, an welchem Montageort die nächste Busteilnehmeranregung stattfinden soll, vielmehr bekommt der administrative Busteilnehmer die Information, welcher der nächste Montageort ist, an dem ein Busteilnehmer angeregt wird. Die Reihenfolge kann beispielsweise durch die Aufforderungseinheit festgelegt werden. In einer anderen Ausgestaltung kann die Aufforderungseinheit selbst von einem Dritten, die Reihenfolge der Montageorte vorgegeben bekommen.

In einem auf den Mitteilungsschritt folgenden Aufforderungsschritt fordert die Aufforderungseinheit einen Identifikationsanreger zur Abgabe der Identifikationsanregung auf. Der Identifikationsanreger kann hierbei beispielsweise ein Techniker sein, der das Bussystem initialisiert. Alternativ kann der Identifikationsanreger beispielsweise auch ein Busteilnehmer in dem Bussystem sein, insbesondere ein Feldgerät der Prozessanlage sein, der/das die Identifikationsanregung abgibt.

In einer weiteren Ausgestaltung ist wenigstens ein dritter Busteilnehmer in dem Bussystem vorgesehen, wobei der dritte Busteilnehmer an einem Montageort in der Prozessanlage verbaut ist und ebenfalls einen Identifikationssensor aufweist. Der dritte Busteilnehmer ist hierbei in einer derartigen räumlichen Anordnung zu dem zweiten Busteilnehmer angeordnet, dass eine beabsichtigte Identifikationsanregung des Identifikationssensors des zweiten Busteilnehmers auch zu einer unbeabsichtigten Identifikationsanregung des Identifikationssensors des dritten Busteilnehmers führt. Entsprechend senden sowohl der zweite Busteilnehmer als auch der dritte Busteilnehmer jeweils ein Identifikationssignal an den administrativen Busteilnehmer aus. Des Weiteren ist vorgesehen, dass das Identifikationssignal einen die Identifikationsanregung charakterisierenden Signalanteil aufweist.

Bei einer weiteren Ausgestaltung des erfindungsgemäßen Verfahrens ist entsprechend vorgesehen, dass in einem Vergleichsschritt der administrative Busteilnehmer nach Erhalt der beiden Identifikationssignale die die Identifikationsanregung charakterisierenden Signalanteile der Identifikationssignale miteinander vergleicht und durch den Vergleich den beabsichtigt angeregten Busteilnehmer identifiziert. In einem auf den Vergleichsschritt folgenden Zuordnungsschritt ordnet der administrative Busteilnehmer den beabsichtigt angeregten Busteilnehmer einem Montageort der in der Liste abgelegten Montageorte zu.

Durch diese erfindungsgemäße Ausgestaltung des Verfahrens kann verhindert werden, dass fälschlicherweise ein Busteilnehmer einem falschen Montageort zugeordnet wird, dadurch, dass er unbeabsichtigt durch eine Identifikationsanregung eines benachbarten Busteilnehmers angeregt worden ist. Eine derartige unbeabsichtigte Anregung lässt sich dann nicht vermeiden, wenn die Busteilnehmer an sehr eng benachbarten Montageorten angeordnet sind und/oder dann nicht, wenn die Identifikationsanregung nicht lokal begrenzt ist. Der Sachverhalt soll im Folgenden anhand eines - die Erfindung jedoch nicht einschränkenden - Beispiels erläutert werden. Ist beispielsweise der Identifikationssensor als Hall-Sensor ausgebildet und misst entsprechend ein Magnetfeld, so erfolgt die Identifikationsanregung dadurch, dass der Identifikationssensor einem Magnetfeld ausgesetzt wird. Das Magnetfeld wird durch eine Magnetfelderzeugungseinrichtung erzeugt, beispielsweise durch einen Permanentmagneten. Um den Identifikationssensor anzuregen, werden Magnetfelderzeugungseinrichtung und Busteilnehmer räumlich derart nah zusammengebracht, dass das Magnetfeld den Identifikationssensor durchsetzt. Ist nun ein weitere Busteilnehmer mit einem weiteren als Hall-Sensor realisierten Identifikationssensor derart benachbart zu dem zweiten Busteilnehmer angeordnet, dass das Magnetfeld auch den Hall-Sensor des weiteren Busteilnehmers zumindest teilweise durchsetzt, wird dieser ebenfalls zur Abgabe eines ihn identifizierenden Identifikationssignals angeregt.

Neben dem Verfahren zum Initialisieren eines Bussystems betrifft die Erfindung ebenfalls ein Bussystem für eine Prozessanlage. Das Bussystem weist wenigstens einen ersten Busteilnehmer und einen zweiten Busteilnehmer auf, wobei der erste Busteilnehmer und der zweite Busteilnehmer jeweils an einem Montageort in der Prozessanlage verbaut sind. Der erste Busteilnehmer ist ein administrativer Busteilnehmer, wobei in dem ersten Busteilnehmer eine Liste wenigstens zweier Montageorte der Busteilnehmer abgelegt ist. Zudem sind der erste Busteilnehmer und der zweite Busteilnehmer über einen Datenbus miteinander verbunden.

Die Aufgabe ist bei dem Bussystem zunächst und im Wesentlichen dadurch gelöst, dass wenigstens der zweite Busteilnehmer einen Identifikationssensor aufweist, wobei der zweite Busteilnehmer derart ausgestaltet ist, dass er nach Aufnahme einer Identifikationsanregung über den Identifikationssensor ein den zweiten Busteilnehmer identifizierendes Identifikationssignal an den administrativen Busteilnehmer sendet. Ferner ist der administrative Busteilnehmer derart ausgestaltet, dass er nach Erhalt des den zweiten Busteilnehmer identifizierenden Identifikationssignals eine Zuordnung des zweiten Busteilnehmers zu einem Montageort der in der abgelegten Liste aufgeführten Montageorte vornimmt.

In einer besonders bevorzugten Ausgestaltung ist eine Aufforderungseinheit vorgesehen, die über einen Kommunikationskanal mit dem administrativen Busteilnehmer verbunden ist. Der Kommunikationskanal kann hierbei beispielsweise ein drahtloser Kommunikationskanal oder ein drahtgebundener Kommunikationskanal sein. Der Identifikationsanreger kann beispielsweise ein Benutzer sein, insbesondere ein Techniker, der die Prozessanlage mit dem erfindungsgemäßen Bussystem in Betrieb nimmt. Der Identifikationsanreger kann jedoch auch beispielsweise durch ein Feldgerät der Prozessanlage realisiert sein. Die Aufforderungseinheit ist derart ausgestaltet, dass sie einen Identifikationsanreger zur Abgabe der Identifikationsanregung auffordert.

In einer besonders vorteilhaften Ausgestaltung des erfindungsgemäßen Bussystems ist die Aufforderungseinheit derart ausgestaltet, dass sie dem administrativen Busteilnehmer den Montageort des anzuregenden Busteilnehmers mitteilt. In dieser Ausgestaltung wird also dem administrativen Busteilnehmer der Ort mitgeteilt, an dem der dort verbaute Busteilnehmer angeregt wird.

In einer alternativen Ausgestaltung ist der administrative Busteilnehmer derart ausgestaltet, dass er der Aufforderungseinheit den Montageort des anzuregenden Busteilnehmers mitteilt. Der administrative Busteilnehmer teilt entsprechend der Aufforderungseinheit mit, dass eine Aufforderung zur Abgabe einer Identifikationsanregung des Busteilnehmers an dem - insbesondere von dem administrativen Busteilnehmer festgelegten - Montageort erfolgen soll.

Besonders bevorzugt legt der administrative Busteilnehmer die Reihenfolge der Montageorte fest, an denen - bevorzugt nacheinanderfolgend - die dort verbauten Busteilnehmer angeregt werden sollen.

Die Identifikationssensoren können erfindungsgemäß auf verschiedene Art und Weise realisiert sein. Besonders bevorzugt ist der Identifikationssensor eines Busteilnehmers als induktiver Sensor, als kapazitiver Sensor, als Beschleunigungssensor, als Hall-Sensor, als Infrarot-Sensor oder als Taster ausgestaltet. Die Aufzählung ist nicht abschließend, vielmehr ist jegliche weitere Ausgestaltung des Identifikationssensors von der Erfindung umfasst.

Die Art der Identifikationsanregung ist abhängig von der Ausgestaltung des Identifikationssensors.

Ist der Identifikationssensor beispielsweise als Beschleunigungssensor ausgestaltet, dann wird die Identifikationsanregung durch eine Bewegung, beispielsweise eine Erschütterung, des Busteilnehmers realisiert. Das kann dadurch realisiert werden, dass beispielsweise der Techniker gegen den Busteilnehmer klopft.

Ist der Identifikationssensor als Hall-Sensor ausgestaltet, kann die Identifikationsanregung beispielsweise dadurch realisiert werden, dass eine Magnetfeldquelle, beispielsweise ein Permanentmagnet, an den Busteilnehmer gehalten wird. In einer alternativen Ausgestaltung ist eine Magnetfeldquelle fest in der Prozessanlage verbaut und wird der Busteilnehmer in die Nähe der Magnetfeldquelle verbracht.

Ist der Identifikationssensor als Infrarot-Sensor ausgestaltet, erfolgt die Identifikationsanregung bevorzugt durch Einkopplung eines Infrarot-Signals, das von einem Infrarot-Sender ausgesendet wird.

Ist der Identifikationssensor als Taster ausgestaltet, erfolgt die Identifikationsanregung durch Tastendruck. Hierdurch kann beispielsweise ein Stromkreis in dem Busteilnehmer geschlossen oder geöffnet werden.

In einer Ausgestaltung, bei der mehrere Busteilnehmer mit jeweils einen Identifikationssensor vorgesehen sind, sind die Identifikationssensoren der einzelnen Busteilnehmer identisch ausgebildet. In einer weiteren Ausgestaltung, bei der mehrere Busteilnehmer mit jeweils einem Identifikationssensor vorgesehen sind, sind die Identifikationssensoren der einzelnen Busteilnehmer auf verschiedene Art realisiert. In einer weiteren Ausgestaltung, bei der mehrere Busteilnehmer mit jeweils einem Identifikationssensor vorgesehen sind, sind einige Identifikationssensoren identisch und andere verschieden voneinander ausgebildet.

In einer weiteren bevorzugten Ausgestaltung des erfindungsgemäßen Bussystems ist vorgesehen, dass wenigstens ein dritter Busteilnehmer an einem Montageort in der Prozessanlage verbaut ist. Der dritte Busteilnehmer weist einen Identifikationssensor auf und ist in einer derartigen räumlichen Anordnung zu dem zweiten Busteilnehmer angeordnet, dass eine beabsichtigte Identifikationsanregung des Identifikationssensors des zweiten Busteilnehmers ebenfalls zu einer unbeabsichtigten Identifikationsanregung des Identifikationssensors des dritten Busteilnehmers führt. Beide Busteilnehmer senden dann ein Identifikationssignal an den administrativen Busteilnehmer aus.

Der administrative Busteilnehmer empfängt entsprechend zwei Idenfikitationssignale, wobei jedoch nur ein Busteilnehmer dem Montageort zugeordnet werden kann bzw. zugeordnet werden soll.

Erfindungsgemäß ist weiter vorgesehen, dass das Identifikationssignal einen die Identifikationsanregung charakterisierenden Signalanteil aufweist. Ferner ist der administrative Busteilnehmer derart ausgestaltet, dass er nach Erhalt der beiden Identifikationssignale die die Identifikationsanregung charakterisierenden Signalanteile der Identifikationssignale miteinander vergleicht und durch den Vergleich auf den beabsichtigt angeregten Busteilnehmer rückschließt und diesen Busteilnehmer einem Montageort zuordnet. So wird eine eindeutige Zuordnung eines einzigen Busteilnehmers zu einem Montageort gewährleistet.

In einer besonders bevorzugten Ausgestaltung ist der administrative Busteilnehmer derart ausgestaltet, dass er die Signalamplituden der die Identifikationsanregung charakterisierenden Signalanteile miteinander vergleicht. Hierbei ist die Signalamplitude des beabsichtigt angeregten Busteilnehmers größer als die Signalamplitude des unbeabsichtigt angeregten Busteilnehmers.

Die vorbeschriebenen Verfahren eignen sich neben der Initialisierung des erfindungsgemäßen Bussystems auch dazu, eine Positionserkennung einzelner Busteilnehmer im laufenden Betrieb zu ermöglichen.

Das erfindungsgemäße Verfahren eignet sich ebenfalls zur Vereinfachung eines Feldgerätetausches in einer Prozessanlage. Das neu eingesetzte Feldgerät kann dann auf erfindungsgemäße Art und Weise initialisiert werden.

Im Einzelnen gibt es nun eine Vielzahl von Möglichkeiten, das erfindungsgemäße Verfahren und das erfindungsgemäße Bussystem auszugestalten und weiterzubilden. Hierzu wird verweisen einerseits auf die den nebengeordneten Patentansprüchen nachgeordneten Patentansprüche, andererseits auf die Beschreibung von Ausführungsbeispielen in Verbindung mit der Zeichnung. In der Zeichnung zeigen
- Fig. 1: ein Blockdiagramm einer ersten Ausführungsform eines Verfahrens zur Initialisierung eines Bussystems,
- Fig. 2: ein Blockdiagramm einer zweiten Ausführungsform eines Verfahrens zur Initialisierung eines Bussystems,
- Fig. 3: eine Prozessanlage mit einem Bussystem und
- Fig. 4: verschiedene Ausgestaltungen des Identifikationssensors sowie der Identifikationsanregung.

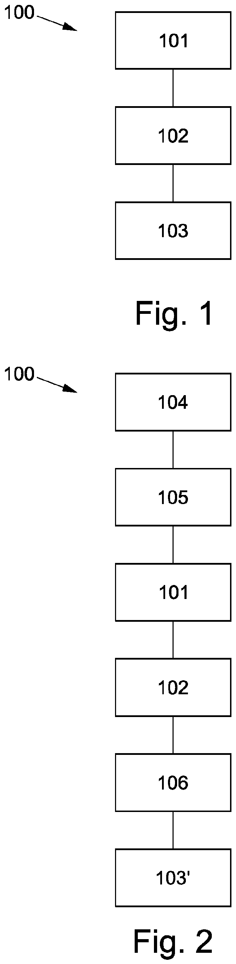

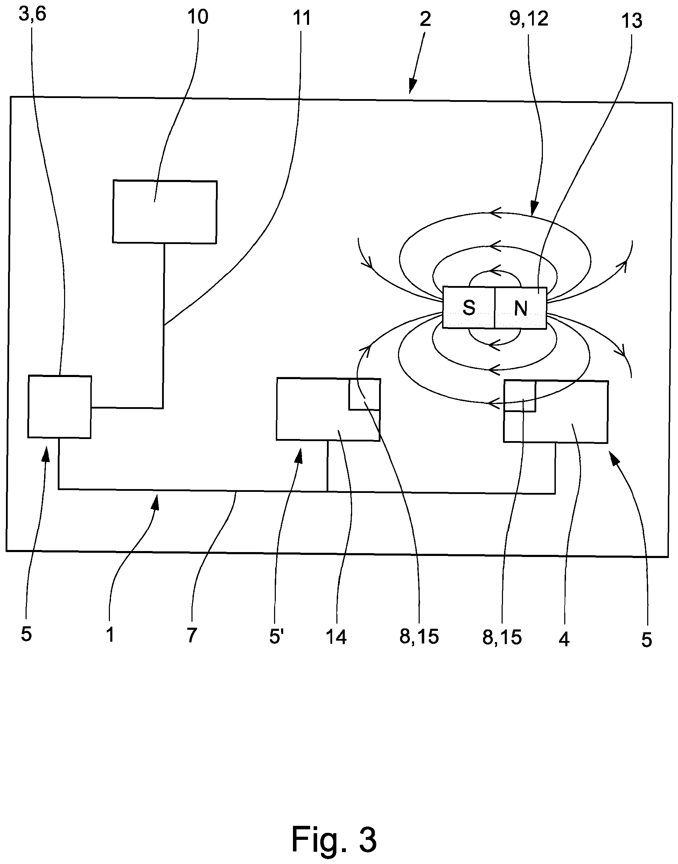

Fig. 1 zeigt ein Blockdiagramm eines Verfahrens 100 zum Initialisieren eines Bussystems 1 für eine Prozessanlage 2. Eine schematische Darstellung des Bussystems 1, das mit dem in Fig. 1 dargestellten Verfahren 100 initialisiert wird, ist in Fig. 3 dargestellt.

Das in Fig. 3 dargestellte Bussystem ist in einer Prozessanlage 2 verbaut, wobei die Prozessanlage 2 im dargestellten Ausführungsbeispiel als Abfüllanlage zum Abfüllen von fließfähigen Medien in Behältnisse ausgebildet ist. Die Darstellung der Prozessanlage 2 als Abfüllanlage soll die Erfindung jedoch nicht beschränken. Vielmehr kann das Bussystem 1 in jegliche Prozessanlage 2 verbaut werden.

Das Bussystem 1 weist einen ersten Busteilnehmer 3 und einen zweiten Busteilnehmer 4 auf, wobei der erste Busteilnehmer 3 und der zweite Busteilnehmer 4 jeweils an einem Montageort 5 in der Prozessanlage 2 verbaut sind. Der erste Busteilnehmer 3 ist als administrativer Busteilnehmer 6 realisiert, in dem ersten Busteilnehmer 3 ist eine Liste wenigstens zweier Montageorte 5 der Busteilnehmer 3, 4 abgelegt. Zudem sind der erste Busteilnehmer 3 und der zweite Busteilnehmer 4 über einen Datenbus 7 miteinander verbunden. Der zweite Busteilnehmer 4 weist einen Identifikationssensor 8 auf.

Das Verfahren 100 - dargestellt in Fig. 1 - zeichnet sich nun dadurch aus, dass zunächst in einem Anregungsschritt 101 der Identifikationssensor 8 des zweiten Busteilnehmers 4 mit einer Identifikationsanregung 9 angeregt wird. Nach der Aufnahme der Identifikationsanregung 9 durch den Identifikationssensor 8 des zweiten Busteilnehmers 4 sendet der zweite Busteilnehmer 4 in einem Sendeschritt 102 ein ihn identifizierendes Identifikationssignal an den administrativen Busteilnehmer 6. In einem Zuordnungsschritt 103 nimmt der administrative Busteilnehmer 6 nach Erhalt des den zweiten Busteilnehmer 4 identifizierenden Identifikationssignals eine Zuordnung des zweiten Busteilnehmers 4 zu einem Montageort 5 der in der abgelegten Liste aufgeführten Montageorte 5 vor. Durch das dargestellte Verfahren ist eine Initialisierung des im Bussystem 1 auf sehr zeitsparende und elegante Art und Weise möglich, da eine manuelle Zuordnung der einzelnen Busteilnehmer 3, 4 zu den Montageorten 5 der Prozessanlage 2 entfällt.

Wie in Fig. 3 ersichtlich, ist zudem eine Aufforderungseinheit 10 vorgesehen, die über einen Kommunikationskanal 11 mit dem administrativen Busteilnehmer 6 verbunden ist. Im dargestellten Ausführungsbeispiel ist die Aufforderungseinheit 10 als Display realisiert. Der administrative Busteilnehmer 6 ist in dem dargestellten Ausführungsbeispiel derart ausgestaltet, dass er der Aufforderungseinheit 10 den Montageort 5 des anzuregenden Busteilnehmers 4 mitteilt. Auf dem Display wird entsprechend der Montageort 5 des anzuregenden Busteilnehmers 4 abgebildet und ist beispielsweise für einen Techniker, der das Bussystem initialisiert, sichtbar. Zudem ist die Aufforderungseinheit 10 derart ausgestaltet, dass sie einen Identifikationsanreger 11, nämlich vorliegend beispielsweise den Techniker, zur Abgabe der Identifikationsanregung 9 auffordert. Im vorliegenden Beispiel kann das dadurch realisiert sein, dass die Aufforderungseinheit 10 einen Signalton abgibt, und zudem den Montageort 5 des als nächstes anzuregenden Busteilnehmers 4 visuell signalisiert.

Bei dem in Fig. 3 dargestellten Ausführungsbeispiel der Abfüllanlage ist der Identifikationssensor 8 des zweiten Busteilnehmers 4 als Hall-Sensor 15 ausgestaltet. Die Identifikationsanregung 9 erfolgt entsprechend dadurch, dass der Identifikationssensor 8 einem Magnetfeld ausgesetzt wird. Das Magnetfeld 12 wird mittels eines Permanentmagneten 13 erzeugt, der in die Nähe des zweiten Busteilnehmers 4 verbracht wird. In der Fig. 3 ist schematisch der Permanentmagnet 13 mit dem Magnetfeld 12 dargestellt.

Die Prozessanlage 2 weist neben dem zweiten Busteilnehmer 4 einen dritten Busteilnehmer 14 auf, der ebenfalls einen als Hall-Sensor 12 ausgebildeten Identifikationssensor 8 aufweist und räumlich benachbart zu dem zweiten Busteilnehmer 4 angeordnet ist. Wie schematisch dargestellt, führt eine Identifikationsanregung 9 des Identifikationssensors 8 des zweiten Busteilnehmers 4 mittels des Magnetfeldes 12 ebenfalls zu einer Identifikationsanregung 9 des Identifikationssensors 8 des dritten Busteilnehmers 14, da das Magnetfeld 12 auch den dritten Busteilnehmer 14, insbesondere den Identifikationssensor 8 des dritten Busteilnehmers 14, durchsetzt. Der dritte Busteilnehmer 14 ist identisch zu dem zweiten Busteilnehmer 4 ausgestaltet, ist entsprechend so realisiert, dass er nach Anregung des Identifikationssensors 8 ein Identifikationssignal an den administrativen Busteilnehmer 6 sendet. Entsprechend senden vorliegend sowohl der zweite Busteilnehmer 4 als auch der dritte Busteilnehmer 14 ein Identifikationssignal an den administrativen Busteilnehmer 6.

Das Identifikationssignal weist einen die Identifikationsanregung 9 charakterisierenden Signalanteil auf. Der administrative Busteilnehmer 6 ist entsprechend derart ausgestaltet, das er nach Erhalt der beiden Identifikationssignale die die Identifikationsanregung 9 charakterisierenden Signalanteile der Identifikationssignale miteinander vergleicht und durch den Vergleich der Signalanteile auf denjenigen Busteilnehmer 4, 14 rückschließt, der beabsichtigt angeregt worden ist, dem also die Identifikationsanregung 9 galt. Dieser Busteilnehmer, vorliegend der Busteilnehmer 4, wird dann von dem administrativen Busteilnehmer 6 einem Montageort 5 zugeordnet. Vorliegend vergleicht der administrative Busteilnehmer 6 die Signalamplituden der die Identifikationsanregung charakterisierenden Signalanteile. Durch eine derartige Ausgestaltung kann eine fälschliche Zuordnung eines Busteilnehmers 4, 14 zu einem Montageort 5 verhindert werden, wenn dieser unbeabsichtigt, nämlich aufgrund der Identifikationsanregung 9 eines benachbarten Busteilnehmers 4 ein Identifikationssignal aussendet.

In Fig. 2 ist ein weiteres Verfahren 100 dargestellt, das im Vergleich zu dem in Fig. 1 dargestellten Verfahren 100 weitere Verfahrensschritte aufweist. In einem Mitteilungsschritt 104 teilt der administrative Busteilnehmer 6 der Aufforderungseinheit 10 den Montageort 5 des anzuregenden Busteilnehmers 4 mit. In einem anschließenden Aufforderungsschritt 105 fordert die Aufforderungseinheit 10 einen Identifikationsanreger 11 zur Abgabe der Identifikationsanregung 9 auf. Der Identifikationsanreger 11 folgt dieser Aufforderung. Entsprechend wird in einem Anregungsschritt 101 der Identifikationssensor 8 des zweiten Busteilnehmers 4 mit einer Identifikationsanregung 9 angeregt. In einem darauffolgenden Sendeschritt 102 sendet der zweite Busteilnehmer 4 nach Aufnahme der Identifikationsanregung 9 durch den Identifikationssensor 8 ein den zweiten Busteilnehmer 4 identifizierendes Identifikationssignal an den administrativen Busteilnehmer 6. In dem Anregungsschritt 101 wird vorliegend unbeabsichtigt ein Identifikationssensor 8 eines dritten Busteilnehmers 14 angeregt, wobei dieser in dem Sendeschritt 102 ein den dritten Busteilnehmer identifizierendes Identifikationssignal an den administrativen Busteilnehmer 6 sendet. Der administrative Busteilnehmer 6 erhält also zwei Identifikationssignale von zwei verschiedenen Busteilnehmern 4, 14. Die beiden Identifikationssignale weisen jeweils einen die Identifikationsanregung 9 charakterisierenden Signalanteil auf. In einem Vergleichsschritt 106 vergleicht der administrative Busteilnehmer 6 nach Erhalt der beiden Identifikationssignale die die Identifikationsanregung 9 charakterisierenden Signalanteile der Identifikationssignale miteinander und identifiziert durch den Vergleich der Signalanteile den gewollt angeregten Busteilnehmer, vorliegend Busteilnehmer 4. In einem Zuordnungsschritt 103' wird dieser Busteilnehmer einem Montageort 5 zugeordnet.

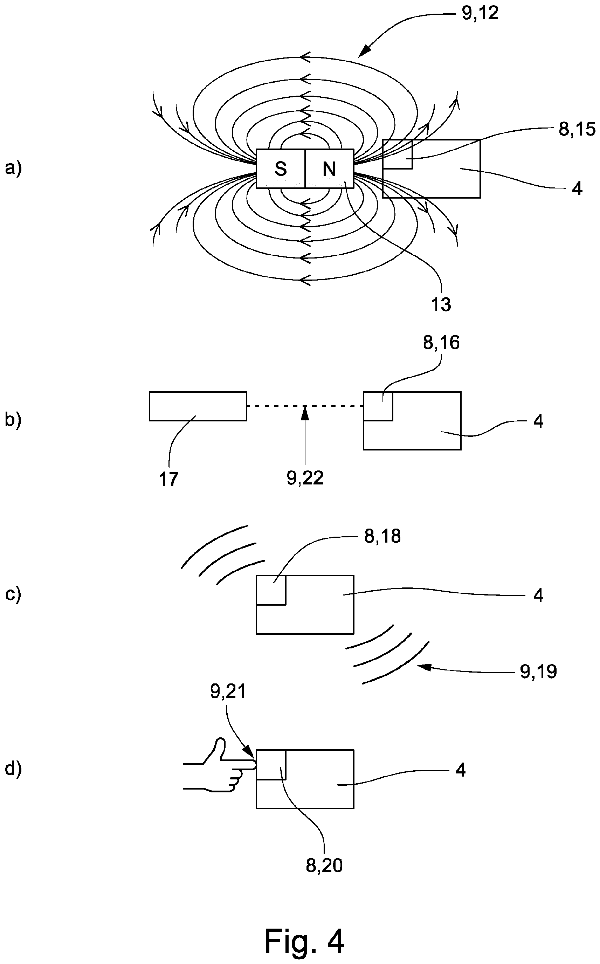

In Fig. 4 sind verschiedene Busteilnehmer 4 mit verschiedenen Identifikationssensoren 8 dargestellt. Zudem dargestellt ist die jeweilige Identifikationsanregung 9, die abgestimmt ist auf die Art des Identifikationssensors 8.

In Fig. 4a ist ein Busteilnehmer 4 mit einem als Hall-Sensor 15 ausgebildeten Identifikationssensor 8 dargestellt. Die Identifikationsanregung 9 erfolgt hier mittels eines Magnetfeldes 12, das durch einen Permanentmagneten 13 erzeugt wird. Der Permanentmagnet 13 wird in die Nähe des Busteilnehmers 4 verbracht, sodass der Identifikationssensor 8, nämlich der Hall-Sensor 15, dem Magnetfeld 12 ausgesetzt ist.

In Fig. 4b ist ein Busteilnehmer 4 mit einem als Infrarot-Sensor 16 ausgebildeten Identifikationssensor 8 dargestellt. Die Identifikationsanregung 9 erfolgt durch ein Infrarot-Signal 22, das durch den Infrarot-Sensor 17 ausgesendet wird.

In Fig. 4c ist ein Busteilnehmer 4 mit einem als Beschleunigungssensor 18, nämlich als kapazitiven Beschleunigungssensor 18 realisierten Identifikationssensor 8 dargestellt. Die Identifikationsanregung 9 erfolgt hier durch eine Erschütterung 19 des Busteilnehmers 4, insbesondere des Beschleunigungssensors 18. Die Erschütterung 19 kann beispielsweise dadurch realisiert werden, dass ein Techniker auf den Busteilnehmer 4 klopft, bzw. diesen anstößt.

In Fig. 4d ist eine weitere Ausgestaltung dargestellt, in der der Busteilnehmer 4 ein als Taster ausgebildeten Identifikationssensor 8 aufweist. Die Identifikationsanregung 9 erfolgt hier durch Tastendruck 21. Dargestellt ist die Hand eines Technikers, der den Tastendruck 21 vornimmt.

### Bezugszeichen

- 100: Verfahren
- 101: Anregungsschritt
- 102: Sendeschritt
- 103: Zuordnungsschritt
- 103': Zuordnungsschritt
- 104: Mitteilungsschritt
- 105: Aufforderungsschritt
- 106: Vergleichsschritt

- 1: Bussystem
- 2: Prozessanlage
- 3: erster Busteilnehmer
- 4: zweiter Busteilnehmer
- 5: Montageort
- 6: administrativer Busteilnehmer
- 7: Datenbus
- 8: Identifikationssensor
- 9: Identifikationsanregung
- 10: Aufforderungseinheit
- 11: Kommunikationskanal
- 12: Magnetfeld
- 13: Permanentmagnet
- 14: dritter Busteilnehmer
- 15: Hall-Sensor
- 16: Infrarotsensor
- 17: Infrarotsender
- 18: Beschleunigungssensor
- 19: Erschütterung
- 20: Taster
- 21: Tastendruck
- 22: Infrarotsignal

## Patentansprüche

1. Verfahren (100) zum Initialisieren eines Bussystems (1) für eine Prozessanlage (2), wobei das Bussystem (1) wenigstens einen ersten Busteilnehmer (3) und einen zweiten Busteilnehmer (4) aufweist,
wobei der erste Busteilnehmer (3) und der zweite Busteilnehmer (4) jeweils an einem Montageort (5) in der Prozessanlage (2) verbaut sind,
wobei der erste Busteilnehmer (3) ein administrativer Busteilnehmer (6) ist und wobei in dem ersten Busteilnehmer (3) eine Liste wenigstens zweier Montageorte (5) der Busteilnehmer (3, 4) abgelegt ist,
wobei der erste Busteilnehmer (3) und der zweite Busteilnehmer (4) über einen Datenbus (7) miteinander verbunden sind **dadurch gekennzeichnet, dass** wenigstens der zweite Busteilnehmer (4) einen Identifikationssensor (8) aufweist,
wobei in einem Anregungsschritt (101) der Identifikationssensor (8) des zweiten Busteilnehmers (4) mit einer Identifikationsanregung (9) angeregt wird,
wobei in einem Sendeschritt (102) der zweite Busteilnehmer (4) nach Aufnahme der Identifikationsanregung (9) durch den Identifikationssensor (8) ein den zweiten Busteilnehmer (4) identifizierendes Identifikationssignal an den administrativen Busteilnehmer (6) sendet und
wobei in einem Zuordnungsschritt (103) der administrative Busteilnehmer (6) nach Erhalt des den zweiten Busteilnehmer (4) identifizierenden Identifikationssignals eine Zuordnung des zweiten Busteilnehmers (4) zu einem Montageort (5) der in der abgelegten Liste aufgeführten Montageorte (5) vornimmt.

2. Verfahren nach Anspruch 1, wobei eine Aufforderungseinheit (10) vorgesehen ist, die über einen Kommunikationskanal (11) mit dem administrativen Busteilnehmer (6) verbunden ist, **dadurch gekennzeichnet,**
**dass** in einem Mitteilungsschritt (10) der administrative Busteilnehmer (6) der Aufforderungseinheit (10) den Montageort (5) des anzuregenden Busteilnehmers (4) mitteilt oder die Aufforderungseinheit (10) dem administrativen Busteilnehmer (6) den Montageort (5) des anzuregenden Busteilnehmers (4) mitteilt und dass in einem Aufforderungsschritt (105) die Aufforderungseinheit (10) einen Identifikationsanreger zur Abgabe der Identifikationsanregung (9) auffordert.

3. Verfahren (100) nach Anspruch 1 oder 2, wobei wenigstens ein dritter Busteilnehmer (14) vorgesehen ist, wobei der dritte Busteilnehmer (14) an einem Montageort (5) in der Prozessanlage (2) verbaut ist und einen Identifikationssensor (8) aufweist, wobei der dritte Busteilnehmer (14) in einer derartigen räumlichen Anordnung zu dem zweiten Busteilnehmer (4) steht, dass eine beabsichtigte Identifikationsanregung (9) des Identifikationssensors (8) des zweiten Busteilnehmers (4) auch zu einer unbeabsichtigten Identifikationsanregung (9) des Identifikationssensors (8) des dritten Busteilnehmers (14) führt, sodass der zweite Busteilnehmer (4) und der dritte Busteilnehmer (14) jeweils ein Identifikationssignal aussenden, wobei das Identifikationssignal einen die Identifikationsanregung (9) charakterisierenden Signalanteil aufweist, wobei in einem Vergleichsschritt (106) der administrative Busteilnehmer (6) nach Erhalt der beiden Identifikationssignale die die Identifikationsanregung (9) charakterisierenden Signalanteile der Identifikationssignale miteinander vergleicht und durch den Vergleich den beabsichtigt angeregten Busteilnehmer (4) identifiziert und in einem Zuordnungsschritt (103') diesen Busteilnehmer (4) einem Montageort (5) der in der abgelegten Liste aufgeführten Montageorte (5) zuordnet.

4. Bussystem (1) für eine Prozessanlage (2), mit wenigstens einem ersten Busteilnehmer (3) und mit wenigstens einem zweiten Busteilnehmer (4), wobei der erste Busteilnehmer (3) und der zweite Busteilnehmer (4) jeweils an einem Montageort (5) in der Prozessanlage (2) verbaut sind, wobei der erste Busteilnehmer (3) ein administrativer Busteilnehmer (6) ist und wobei in dem ersten Busteilnehmer (3) eine Liste wenigstens zweiter Montageorte (5) der Busteilnehmer (3, 4) abgelegt ist, und wobei der erste Busteilnehmer (3) und der zweite Busteilnehmer (4) über einen Datenbus (7) miteinander verbunden sind,
**dadurch gekennzeichnet,**
**dass** wenigstens der zweite Busteilnehmer (4) einen Identifikationssensor (8) aufweist, wobei der zweite Busteilnehmer (4) derart ausgestaltet ist, dass er nach Aufnahme einer Identifikationsanregung (9) über den Identifikationssensor (8) ein den zweiten Busteilnehmer (4) identifizierendes Identifikationssignal an den administrativen Busteilnehmer (6) sendet und dass der administrative Busteilnehmer (6) derart ausgestaltet ist, dass er nach Erhalt des den zweiten Busteilnehmer (4) identifizierenden Identifikationssignals eine Zuordnung des zweiten Busteilnehmers (4) zu einem Montageort (5) der in der abgelegten Liste aufgeführten Montageorte (5) vornimmt.

5. Bussystem (1) nach Anspruch 4, **dadurch gekennzeichnet, dass** eine Aufforderungseinheit (10) vorgesehen ist, dass die Aufforderungseinheit (10) über einen Kommunikationskanal (11) mit dem administrativen Busteilnehmer (6) verbunden ist und dass die Aufforderungseinheit (10) derart ausgestaltet ist, dass sie einen Identifikationsanreger zur Abgabe der Identifikationsanregung (9) auffordert.

6. Bussystem (1) nach Anspruch 5, **dadurch gekennzeichnet, dass** die Aufforderungseinheit (10) derart ausgestaltet ist, dass sie dem administrativen Busteilnehmer (6) den Montageort (5) des anzuregenden Busteilnehmers (4) mitteilt, oder dass der administrative Busteilnehmer (6) derart ausgestaltet ist, dass er der Aufforderungseinheit (10) den Montageort (5) des anzuregenden Busteilnehmers (4) mitteilt.

7. Bussystem (1) nach einem der Ansprüche 4 bis 6, **dadurch gekennzeichnet, dass** der Identifikationssensor (8) als induktiver Sensor, als kapazitiver Sensor, als Hall-Sensor (15), als Infrarot-Sensor (16), als Beschleunigungssensor (18) oder als Taster (20) ausgestaltet ist.

8. Bussystem (1) nach einem der Ansprüche 4 bis 7, **dadurch gekennzeichnet, dass** wenigstens ein dritter Busteilnehmer (14) an einem Montageort (5) in der Prozessanlage (2) verbaut ist, dass der dritte Busteilnehmer (14) einen Identifikationssensor (8) aufweist und in einer derartigen räumlichen Anordnung zu dem zweiten Busteilnehmer (4) steht, dass eine beabsichtigte Identifikationsanregung (9) des Identifikationssensors (8) des zweiten Busteilnehmers (4) ebenfalls zu einer unbeabsichtigten Identifikationsanregung (9) des Identifikationssensors (8) des dritten Busteilnehmers (14) führt, sodass beide Busteilnehmer (4, 14) ein Identifikationssignal an den administrativen Busteilnehmer (6) aussenden, dass das Identifikationssignal einen die Identifikationsanregung (9) charakterisierenden Signalanteil aufweist, und dass der administrative Busteilnehmer (6) derart ausgestaltet ist, dass er nach Erhalt der beiden Identifikationssignale die die Identifikationsanregung (9) charakterisierenden Signalanteile der Identifikationssignale miteinander vergleicht und durch den Vergleich auf den beabsichtigt angeregten Busteilnehmer (4, 14) identifiziert und diesen Busteilnehmer (4) einem Montageort (5) der in der abgelegten Liste aufgeführten Montageorte (5) zuordnet.

## Claims

1. Method (100) for initializing a bus system (1) for a process facility (2), wherein the bus system (1) comprises at least a first bus subscriber (3) and a second bus subscriber (4),
wherein the first bus subscriber (3) and the second bus subscriber (4) are each installed at an installation site (5) in the process facility (2),
wherein the first bus subscriber (3) is an administrative bus subscriber (6) and wherein a list of at least two installation sites (5) of the bus subscribers (3, 4) is stored in the first bus subscriber (3),
wherein the first bus subscriber (3) and the second bus subscriber (4) are connected to one another via a data bus (7),
**characterized in**
**that** at least the second bus subscriber (4) has an identification sensor (8),
wherein in a prompting step (101) the identification sensor (8) of the second bus subscriber (4) is prompted with an identification prompt (9),
wherein in a transmitting step (102) the second bus subscriber (4), after the identification senor (8) receives the identification prompt (9), transmits an identification signal identifying the second bus subscriber (4) to the administrative bus subscriber (6), and
wherein in a match-up step (103) the administrative bus subscriber (6), after receiving the identification signal identifying the second bus subscriber (4), matches up the second bus subscriber (4) with an installation site (5) of the installation sites (5) included in the stored list.

2. Method according to claim 1, wherein a requesting unit (10) is provided, which is connected to the administrative bus subscriber (6) via a communication channel (11), **characterized in**
**that**, in a communicating step (104), the administrative bus subscriber (6) communicates to the requesting unit (10) the installation site (5) of the bus subscriber (4) to be prompted, or the requesting unit (10) communicates to the administrative bus subscriber (6) the installation site (5) of the bus subscriber (4) to be prompted, and
**that**, in a requesting step (105), the requesting unit (10) requests an identification prompter to issue the identification prompt (9).

3. Method (100) according to claim 1 or 2, wherein at least one third bus participant (14) is provided, wherein the third bus participant (14) is installed at an installation site (5) in the process facility (2) and comprises an identification sensor (8), wherein the third bus subscriber (14) is spatially arranged relative to the second bus subscriber (4) in such a way that an intended identification prompt (9) of the identification sensor (8) of the second bus subscriber (4) also leads to an unintended identification prompt (9) of the identification sensor (8) of the third bus subscriber (14), so that the second bus subscriber (4) and the third bus subscriber (14) each send out an identification signal, wherein the identification signal has a signal component characterizing the identification prompt (9), wherein in a comparing step (106) the administrative bus subscriber (6), after receiving the two identification signals, compares the signal components of the identification signals characterizing the identification prompt (9) with one another and identifies the intentionally prompted bus subscriber (4) by means of the comparison, and in an match-up step (103') matches up this bus subscriber (4) to an installation site (5) of the installation sites (5) listed in the stored list.

4. Bus system (1) for a process facility (2), having at least one first bus subscriber (3) and having at least one second bus subscriber (4), wherein the first bus subscriber (3) and the second bus subscriber (4) are each installed at an installation site (5) in the process facility (2), wherein the first bus subscriber (3) is an administrative bus subscriber (6) and wherein a list of at least second installation sites (5) of the bus subscribers (3, 4) is stored in the first bus subscriber (3), and wherein the first bus subscriber (3) and the second bus subscriber (4) are connected to one another via a data bus (7),
**characterized in**
**that** at least the second bus subscriber (4) has an identification sensor (8), wherein the second bus subscriber (4) is configured in such a way that, after receiving an identification prompt (9) via the identification sensor (8), it sends out an identification signal identifying the second bus subscriber (4) to the administrative bus subscriber (6), and that the administrative bus subscriber (6) is configured in such a way that, after receiving the identification signal identifying the second bus subscriber (4), it matches up the second bus subscriber (4) to an installation site (5) of the installation sites (5) listed in the stored list.

5. Bus system (1) according to claim 4, **characterized in that** a requesting unit (10) is provided, **in that** the requesting unit (10) is connected to the administrative bus subscriber (6) via a communication channel (11), and **in that** the requesting unit (10) is configured in such a way that it prompts an identification prompter to issue the identification prompt (9).

6. Bus system (1) according to claim 5, **characterized in that** the requesting unit (10) is configured in such a way that it informs the administrative bus subscriber (6) of the installation site (5) of the bus subscriber (4) to be prompted, or that the administrative bus subscriber (6) is configured in such a way that it informs the requesting unit (10) of the installation site (5) of the bus subscriber (4) to be prompted.

7. Bus system (1) according to any one of claims 4 to 6, **characterized in that** the identification sensor (8) is designed as an inductive sensor, as a capacitive sensor, as a Hall sensor (15), as an infrared sensor (16), as an acceleration sensor (18) or as a key (20).

8. Bus system (1) according to any one of claims 4 to 7, **characterized in that** at least one third bus subscriber (14) is installed at an installation site (5) in the process facility (2), **in that** the third bus subscriber (14) has an identification sensor (8) and is in such a spatial arrangement with respect to the second bus subscriber (4) that an intended identification prompt (9) of the identification sensor (8) of the second bus subscriber (4) also leads to an unintended identification prompt (9) of the identification sensor (8) of the third bus subscriber (14), so that both bus subscribers (4, 14) send out an identification signal to the administrative bus subscriber (6), that the identification signal has a signal component which characterizes the identification prompt (9), and that the administrative bus subscriber (6) is configured in such a manner that, after receiving the two identification signals, it compares the signal components of the identification signals characterizing the identification prompt (9) with one another and identifies the intentionally prompted bus subscriber (4, 14) by means of the comparison and matches up this bus subscriber (4) to an installation site (5) of the installation sites (5) listed in the stored list.

## Revendications

1. Procédé (100) permettant d'initialiser un système de bus (1) pour une installation de processus (2), dans lequel le système de bus (1) présente au moins un premier participant au bus (3) et un deuxième participant au bus (4),
dans lequel le premier participant au bus (3) et le deuxième participant au bus (4) sont respectivement installés en un emplacement de montage (5) dans l'installation de processus (2),
dans lequel le premier participant au bus (3) est un participant au bus administratif (6), et
dans lequel une liste d'au moins deux emplacements de montage (5) des postes de bus (3, 4) est stockée dans le premier participant au bus (3),
dans lequel le premier participant au bus (3) et le deuxième participant au bus (4) sont reliés l'un à l'autre par un bus de données (7),
**caractérisé en ce qu'**au moins le deuxième participant au bus (4) présente un capteur d'identification (8),
dans lequel dans une étape d'excitation (101), le capteur d'identification (8) du deuxième participant au bus (4) est excité par une excitation d'identification (9),
dans lequel dans une étape d'envoi (102), le deuxième participant au bus (4) envoie au participant au bus administratif (6), après enregistrement de l'excitation d'identification (9) par le capteur d'identification (8), un signal d'identification identifiant le deuxième participant au bus (4), et
dans lequel dans une étape d'affectation (103), le participant au bus administratif (6), après réception du signal d'identification identifiant le deuxième participant au bus (4), effectue une affectation du deuxième participant au bus (4) à un emplacement de montage (5) parmi les emplacements de montage (5) énumérés sur la liste stockée.

2. Procédé selon la revendication 1, dans lequel une unité de demande (10) est prévue qui est reliée au participant au bus administratif (6) par l'intermédiaire d'un canal de communication (11), **caractérisé en ce que** dans une étape de communication (10), le participant au bus administratif (6) communique à l'unité de demande (10) l'emplacement de montage (5) du participant au bus (4) à exciter, ou l'unité de demande (10) communique au participant au bus administratif (6) l'emplacement de montage (5) du participant au bus (4) à exciter, et **en ce que** dans une étape de demande (105), l'unité de demande (10) demande à un excitateur d'identification de délivrer l'excitation d'identification (9).

3. Procédé (100) selon la revendication 1 ou 2, dans lequel au moins un troisième participant au bus (14) est prévu, dans lequel le troisième participant au bus (14) est installé en un emplacement de montage (5) dans l'installation de processus (2) et présente un capteur d'identification (8), dans lequel le troisième participant au bus (14) se trouve dans une disposition spatiale par rapport au deuxième participant au bus (4) telle qu'une excitation d'identification (9) intentionnelle du deuxième participant au bus (4) par le capteur d'identification (8) conduit également à une excitation d'identification (9) non intentionnelle du troisième participant au bus (14) par le capteur d'identification (8) de sorte que le deuxième participant au bus (4) et le troisième participant au bus (14) émettent respectivement un signal d'identification, dans lequel le signal d'identification présente une part de signal caractérisant l'excitation d'identification (9),
dans lequel dans une étape de comparaison (106), le participant au bus administratif (6), après réception des deux signaux d'identification, compare l'une avec l'autre les parts de signal, caractérisant l'excitation d'identification (9), des signaux d'identification, et identifie par la comparaison le participant au bus (4) excité intentionnellement, et dans une étape d'affectation (103'), affecte ce participant au bus (4) à un emplacement de montage (5) parmi les emplacements de montage (5) énumérés sur la liste stockée.

4. Système de bus (1) pour une installation de processus (2), comprenant au moins un premier participant au bus (3) et au moins un deuxième participant au bus (4), dans lequel le premier participant au bus (3) et le deuxième participant au bus (4) sont respectivement installés en un emplacement de montage (5) dans l'installation de processus (2), dans lequel le premier participant au bus (3) est un participant au bus administratif (6), et dans lequel une liste d'au moins deux emplacements de montage (5) des postes de bus (3, 4) est stockée dans le premier participant au bus (3), et dans lequel le premier participant au bus (3) et le deuxième participant au bus (4) sont reliés l'un à l'autre par l'intermédiaire d'un bus de données (7),
**caractérisé en ce qu'**au moins le deuxième participant au bus (4) présente un capteur d'identification (8), dans lequel le deuxième participant au bus (4) est configuré de telle sorte, qu'après enregistrement d'une excitation d'identification (9), il envoie au participant au bus administratif (6) par l'intermédiaire du capteur d'identification (8) un signal d'identification identifiant le deuxième participant au bus (4), et qu'après réception du signal d'identification identifiant le deuxième participant au bus (4), il effectue une affectation du deuxième participant au bus (4) à un emplacement de montage (5) parmi les emplacements de montage (5) énumérés sur la liste stockée.

5. Système de bus (1) selon la revendication 4, **caractérisé en ce qu'**une unité de demande (10) est prévue, **en ce que** l'unité de demande (10) est reliée au participant au bus administratif (6) par l'intermédiaire d'un canal de communication (11), et **en ce que** l'unité de demande (10) est configurée de telle sorte qu'elle demande à un excitateur d'identification de délivrer l'excitation d'identification (9).

6. Système de bus (1) selon la revendication 5, **caractérisé en ce que** l'unité de demande (10) est configurée de telle sorte qu'elle communique au participant au bus administratif (6) l'emplacement de montage (5) du participant au bus (4) à exciter, ou **en ce que** le participant au bus administratif (6) est configuré de telle sorte qu'il communique à l'unité de demande (10) l'emplacement de montage (5) du participant au bus (4) à exciter.

7. Système de bus (1) selon l'une quelconque des revendications 4 à 6, **caractérisé en ce que** le capteur d'identification (8) est configuré sous forme de capteur inductif, de capteur capacitif, de capteur à effet Hall (15), de capteur infrarouge (16), de capteur d'accélération (18) ou de palpeur (20).

8. Système de bus (1) selon l'une quelconque des revendications 4 à 7, **caractérisé en ce qu'**au moins un troisième participant au bus (14) est installé en un emplacement de montage (5) dans l'installation de processus (2), **en ce que** le troisième participant au bus (14) présente un capteur d'identification (8) et se trouve dans une disposition spatiale par rapport au deuxième participant au bus (4) telle qu'une excitation d'identification (9) intentionnelle du deuxième participant au bus (4) par le capteur d'identification (8) conduit également à une excitation d'identification (9) non intentionnelle du troisième participant au bus (14) par le capteur d'identification (8) de sorte que les deux participants au bus (4, 14) émettent un signal d'identification à destination du participant au bus administratif (6), que le signal d'identification présente une part de signal caractérisant l'excitation d'identification (9), et que le participant au bus administratif (6) est configuré de telle sorte qu'après réception des deux signaux d'identification, il compare l'une avec l'autre les parts de signal, caractérisant l'excitation d'identification (9), des signaux d'identification, et identifie par la comparaison le participant au bus (4, 14) excité intentionnellement, et affecte ce participant au bus (4) à un emplacement de montage (5) parmi les emplacements de montage (5) énumérés sur la liste stockée.
